# EUROPEAN PATENT APPLICATION

(11) **EP 0 732 356 A2**
(43) Date of publication of application: **18.09.1996**
(21) Application number: 96301447.7
(22) Date of filing: 04.03.1996
(51) Int. Cl.: C08J 7/04, C01F 17/00, C09D 133/06

(54) **Acrylic coatings containing inorganic UV screen**

(30) Priority: 16.03.1995 US 405105
(71) Applicant: GENERAL ELECTRIC COMPANY, Schenectady, NY 12345 (US)
(72) Inventor: Patel, Gautam Ambalal, Clifton Park, New York 12065 (US); Bahr, Steven Roger, Evansville, IN 47712 (US)
(74) Representative: Szary, Anne Catherine

(57) **Abstract**

An article which can withstand exposure to ultraviolet radiation comprises a thermoplastic substrate, and an acrylic primer with an inorganic ultraviolet light absorber, preferably cerium oxide. This acrylic primer can also function as a primer for silicone hardcoats. A cerium oxide organosol for use in the acrylic primer is produced from a cerium oxide aquasol.

## Description

### Background of the Invention

This invention relates to an article which can withstand exposure to ultraviolet radiation. More particularly, it relates to a thermoplastic article coated with an acrylic primer composition that includes an inorganic ultraviolet radiation screen.

Thermoplastics have many desirable properties that make them the material of choice for a myriad of applications. However, they are prone to deterioration due to exposure to sunlight and damage from scratches, mars, and abrasion. Thermoplastics tend to absorb ultraviolet (UV) light, which over time degrades the material.

To protect these materials, one or more coatings are applied as disclosed in U.S. Patent 4,242,381. Typically, these coatings comprise an acrylic coating applied directly onto a thermoplastic substrate and a silicone hardcoat applied onto the acrylic coating.

In an effort to combat the deleterious effects of sunlight, the prior art incorporates organic UV absorbers into either the acrylic coating or the silicone hardcoat. Typical organic UV absorbers include benzotriazoles, hydroxybenzophenones, cyanoacrylates, triazines and benzylidene malonates. Use of such organic UV absorbers is disclosed in U.S. Patents 4,382,109; 4,242,381; 4,284,685; and 4,395,463.

While these organic UV absorbers are effective for a limited period of time, they are prone to oxidation. They lose their effectiveness upon weathering. The limited life of the organic UV absorbers has promoted interest in the use of inorganic UV absorbers.

The prior art discloses the use of inorganic UV absorbers as a constituent of the silicone hardcoat. Use of titanium oxide, antimony oxide and cerium oxide, either in combination with each other and/or with silicon dioxide, or individually, is disclosed in European Patent 486,469; U.S. Patents 4,275,118; 4,442,168; 4,702,773; and 4,799,963; and in the article, "UV Highly Absorbent Coatings with CeO₂ and TiO₂", by M. A. Sainz, A. Duran and J. M. Fernandez Navarro, in Journal of Non-Crystalline Solids 121, (1990), pages 315-318.

The instant invention is directed to an article that is coated with an acrylic primer containing an inorganic UV absorber. The acrylic primer functions as an ultraviolet protective layer. It can also act as a primer for a silicone hardcoat. The inorganic UV absorber, preferably cerium oxide, is a constituent of a substantially clear and colorless acrylic coating.

Unlike the prior art, where cerium oxide is included in the silicone hardcoat, cerium oxide is incorporated into the acrylic primer in the present invention. Incorporating cerium oxide into the acrylic primer offers new and unexpected advantages over the prior art. With the instant invention, stable solutions with higher concentrations of cerium oxide can be produced and the abrasion resistance of the silicone hardcoat is not negatively impacted. The instant invention allows for a concentration of 10 to 50 parts of cerium oxide per hundred parts of resin in the acrylic primer. The prior art concentrations of cerium oxide in silicone hardcoat are typically much lower. At concentrations of 10 parts of cerium oxide per hundred parts of resin in the silicone hardcoat, abrasion resistance of the hardcoat is significantly reduced. At concentrations higher than 10 parts of cerium oxide per hundred parts of resin, the resulting silicone hardcoat solutions are unstable, the constituents tend to precipitate out of solution.

### Summary of the Invention

In accordance with the present invention, there is provided an article comprising:
a. a thermoplastic substrate, and,
b. an acrylic primer applied onto said thermoplastic substrate,
wherein said acrylic primer includes an inorganic UV absorber.

According to another aspect of the present invention, there is provided a method to prepare an acrylic primer comprising the following steps:
a. preparing an acrylic polymer mixture by mixing an acrylic polymer with a solvent,
b. adding sufficient quantity of a colloidal cerium oxide mixture to said acrylic polymer mixture to yield 10 to 50 parts of. cerium oxide per hundred parts of resin solids (phr).

According to another aspect of the present invention, there is provided a method to produce a cerium oxide organosol from a cerium oxide aquasol comprising the following steps:
a. mixing a cerium oxide aquasol with a water miscible solvent, and,
b. distilling the water out of the resulting mixture azeotropically,
wherein the cerium oxide aquasol is added to the water miscible solvent in sufficient quantity to produce the desired concentration of cerium oxide in the organosol after azeotropic distillation.

### Description of the Preferred Embodiment

The article of the present invention comprises a thermoplastic substrate, and an acrylic primer containing an inorganic UV absorber which is applied to the thermoplastic substrate. A silicone hardcoat may be applied to the acrylic primer to enhance scratch resistance. The method of the present invention requires producing an acrylic polymer mixture and then mixing in a colloidal cerium oxide mixture.

Any thermoplastic that is susceptible to UV degradation can be a substrate for the present invention. Thermoplastic substrate materials include poly.etherimide, polyamide, poly(phenylene oxide), polysulfone , polycarbonate, and polyester, which includes poly(ethylene terephthalate) and poly(butylene terephthalate). Preferably, the thermoplastic substrate is polycarbonate.

Appropriate polycarbonates comprise structural units of the formula 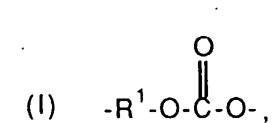 wherein R¹ is a divalent organic radical. Suitable R¹ values include ethylene, propylene, trimethylene, tetramethylene, hexamethylene, dodecamethylene, 1,4-(2-butenylene), 1,10-(2-ethyldecylene), 1,3-cyclopentylene, 1,3-cyclohexylene, 1,4-cyclohexylene, m-phenylene, p-phenylene, 4,4'-biphenylene, 2,2-bis(4-phenylene)propane, benzene-1,4-dimethylene (which is a vinylog of the ethylene radical and has similar properties) and similar radicals such as those which correspond to the dihydroxy compounds disclosed by name or formula (generic or specific) in U.S. Patent 4,217,438, the disclosure of which is incorporated by reference herein. Also included are radicals containing non-hydrocarbon moieties. These may be substituents such as chloro, nitro, alkoxy and the like, and linking radicals such as thio, sulfoxy, sulfone, ester, amide, ether and carbonyl. Most often, however, all R¹ radicals are hydrocarbon radicals.

Preferably at least about 60% and more preferably at least about 80% of the total number of R¹ values in the cyclic oligomer mixtures, and most desirably all of said R¹ values, are aromatic. The aromatic R¹ radicals preferably have the formula

(II) -A¹-Y-A²- ,

wherein each of A¹ and A² is a monocyclic divalent aromatic radical and Y is a bridging radical in which one or two atoms separate A¹ from A². The free valence bonds in formula II are usually in the meta or para positions of A¹ and A² in relation to Y.

In formula II, the A¹ and A² values may be unsubstituted phenylene or substituted derivatives thereof, illustrative substituents (one or more) being alkyl, alkenyl, halo (especially chloro and/or bromo), nitro, alkoxy and the like. Unsubstituted phenylene radicals are preferred. Both A¹ and A² are preferably ρ-phenylene, although both may be o- or m-phenylene or one o- or m-phenylene and the other p-phenylene.

The bridging radical, Y, is one in which one or two atoms, preferably one, separate A¹ from A². It is most often a hydrocarbon radical and particularly a saturated radical such as methylene, cyclohexylmethylene, 2-[2.2.1]-bicycloheptylmethylene, ethylene, isopropylidene, neopentylidene, cyclohexylidene, cyclopentadecylidene, cyclododecylidene or adamantylidene, especially a gem-alkylene (alkylidene) radical. Also included, however, are unsaturated radicals and radicals that contain atoms other than carbon and hydrogen; for example, 2,2-dichloroethylidene, carbonyl, phthalidylidene, oxy, thio, sulfoxy and sulfone. For reasons of availability and particular suitability for the purposes of this invention, the preferred radical of formula II is the 2,2-bis(4-phenylene)propane radical, which is derived from bisphenol A and in which Y is isopropylidene and A¹ and A² are each p-phenylene.

Both thermosettable and thermoplastic acrylic polymers can be used to produce the acrylic primer. Appropriate thermosettable acrylic polymers are well known in the art. Exemplary thermosettable acrylic polymers that may be utilized in the practice of this invention are set forth in *Encyclopedia of Polymer Science and Technology,* column 1, Interscience Publishers, John Wiley & Sons, Inc., at page 273 et seq., and in the *Chemistry of Organic Film Formers,* by D.H. Solomon, John Wiley & Sons, Inc., 1967, at page 251 et seq., and the references cited therein, all of which are hereby incorporated herein by reference.

Generally, the term thermosettable acrylic polymers as used herein includes an acrylic polymer or copolymer having reactive functional groups that are capable of reacting between themselves to effect a cross-linkage thereof. These functional groups may be the same, provided they are of the type that will react between themselves, or the polymer or copolymer may contain two or more different types of reactive functional groups, such as, for example, an epoxide group and a carboxyl group. Thermosettable acrylic polymers also include acrylic polymers or copolymers having a reactive functional group to which there is added an appropriate polymeric cross-linking agent that reacts with the functional group to effect cross-linking. Thermosettable acrylic polymers still further include a mixture of two or more polymers containing cross-linkable functional reactive groups. These polymers may be acrylic polymers or copolymers having reactable, cross-linkable, functional groups thereon, or at least one of the polymers may be an acrylic polymer or copolymer having a reactive functional group and the other polymer or copolymer may be one or more other types of known polymers having functional groups that are reactive with the acrylic functional group to provide the thermoset product as a result of cross-linking.

Appropriate thermoplastic acrylic polymers include homopolymers and copolymers of C₁₋₁₀ alkyl (for example, ethyl, butyl or 2-ethylhexyl) acrylates and methacrylates. Examples include poly(methyl methacrylate) and poly(ethyl methacrylate) and copolymers thereof. Such copolymers are available as commercial products, illustrated by those sold by Rohm and Haas Co. under the trade names Acryloid® B-82, Acryloid B-48N and Acryloid B-44. Such materials are also available from Imperial Chemical Inc. under the trade name Elvacite®. Elvacite consists of various acrylic homopolymers and copolymers.

For use in the present invention, the acrylic polymer mixtures may be of several general types. For instance, one type contains acrylic polymer and a solvent. The solvent used for these compositions is an organic or inorganic solvent that dissolves the acrylic polymer, is inert towards the thermoplastic substrate, and is readily volatilized. Some nonlimiting examples of such solvents include hydroxyethers, alcohols, keto alcohols, liquid aliphatic hydrocarbons, liquid cycloaliphatic hydrocarbons and mixtures thereof.

Preferably, the acrylic primer is produced by dissolving 2 to 6 parts by weight of an acrylic polymer in 100 parts by weight of a. solvent. Suitable solvents include materials such as propylene glycol monomethyl ether and a solvent blend comprising 80 - 90 parts by weight propylene glycol monomethyl ether and 10 - 20 parts by weight diacetone alcohol.

A second type of acrylic polymer mixture that may be employed in the instant invention is one comprised of an emulsion of an acrylic polymer and water. These emulsions are commercially available and sold, for example, by the Rohm & Haas Company of Philadelphia, PA, under the tradename Rhoplex® and B.F. Goodrich Company under the tradename Hycar®. Generally, these emulsions are in the form of emulsion concentrates that contain from about 40 to about 55% by weight solids. However, in formulating the emulsion compositions it is desirable that the emulsion composition contain from about 1 to about 10 weight percent solids. Thus, it is generally necessary to dilute these commercially available emulsion concentrates by the addition of water thereto. Such emulsion compositions may additionally contain a curing catalyst for the thermosettable acrylic polymer. If such a catalyst is present it may be present in from about 0.05 to about 2 weight percent based on the weight of the acrylic polymer solids present. Examples of such catalysts include toluene sulfonic acid, citric acid, phosphoric acid, and the like.

Another type of acrylic polymer mixture employed in the invention includes emulsions comprised of (i) from about 1 to about 10 weight percent of acrylic polymer solids; (ii) from about 20 to about 45 weight percent of a hydroxy ether, an alkanol, or a mixture of a hydroxy ether and an alkanol; and (iii) from about 45 to about 80 weight percent of water.

In this type of composition the acrylic polymer, as is the case with the commercially available emulsions described above, is generally in the form of discrete spherical particles (approximately 0.1 micron in diameter) dispersed in water. Since the polymer particles are separate from the continuous aqueous phase, the viscosity of the dispersion or emulsion is relatively independent of the polymer's molecular weight. Consequently the emulsion can contain acrylic polymers of high molecular weight and yet have a relatively low viscosity. The concentration of the acrylic polymer in this emulsion composition is generally important. This is true because some silicone hardcoats when applied to acrylic primers derived from emulsion compositions containing less than about 1 or more than about 10 weight percent of an acrylic polymer generally tend to exhibit a marked decrease in durability of adhesion. This is especially true after exposure to weathering. Emulsion compositions containing from about 2 to about 6 weight percent of an acrylic polymer are often preferred.

The hydroxy ethers which are present in these emulsion compositions are compounds represented by the general formula

R³-O-R⁴-OH III

wherein R⁴ is a saturated divalent aliphatic radical, preferably one containing from 1 to about 6 carbon atoms, and R³ is an alkyl radical or an alkoxy alkyl radical containing from 1 to about 6 carbon atoms. Suitable hydroxy ethers include butoxyethanol, propylene glycol monomethyl ether and dipropylene glycol monomethyl ether.

The alkanols that may be present in the emulsion composition are those containing usually from 1 to about 4 carbon atoms.

The presence of such hydroxy ethers, alkanols, or hydroxy ether-alkanol mixtures in amounts of from about 20 to about 45 weight percent of the emulsion composition is typical for the satisfactory performance of the emulsion composition in forming an effective layer. If no hydroxy ether or alkanol is present, or if an amount of hydroxy ether or alkanol less than about 20 weight percent is present, the emulsion composition does not generally flow evenly over the solid thermoplastic substrate, i.e., there is uneven distribution of the emulsion composition over the thermoplstic substrate with excessive concentrations of the composition in certain areas and a dearth of the composition in other areas. This results in an unevenly distributed and non-uniform layer being formed which in turn results in inferior adhesion of the hardcoat as well as a streaked appearance of the final coated product. If excessive amounts of hydroxy ether or alkanol are present, i.e., amounts greater than about 45 weight percent, coagulation and precipitation of the acrylic polymer solids generally occur.

Thermoplastic substrates typically absorb UV radiation in the wavelength range of about 300 to about 350 nm. The UV absorber can be any inorganic material that absorbs UV radiation in this wavelength range and results in an essentially clear and colorless coating. Preferably, the inorganic UV absorber comprises colloidal cerium oxide. More preferably, the inorganic UV absorber consists essentially of a cerium oxide aquasol, which is defined as 15 - 25% by weight colloidal cerium oxide in an aqueous medium, with a pH of about 2.0 to about 4.0 and a particle size of 10 - 20 nm.

If the acrylic polymer is dissolved in an organic solvent, it is preferable to use a cerium oxide organosol, which comprises colloidal cerium oxide dispersed in an organic solvent rather than in an aqueous medium. A cerium oxide organosol can be prepared from commercially available cerium oxide aquasols. A cerium oxide aquasol is mixed with a water miscible solvent in sufficient quantity to produce the desired concentration of cerium oxide in the organosol after azeotropic distillation. Solvents such as propylene glycol monomethyl ether are effective. The cerium oxide can be silane-modified by adding an alkoxysilane to the cerium oxide aquasol prior to distillation.

Inorganic UV absorber is added to the acrylic polymer mixture in sufficient quantity to yield 10 to 50 phr of cerium oxide. In addition to the cerium oxide, other ingredients such as antiblushing agents, leveling agents or organic UV absorbers, including benzotriazoles, hydroxybenzophenones, cyanoacrylates, triazines and benzylidene malonates, may also be added to the acrylic polymer mixture. Such ingredients are well known in the art. Additional stirring may be required if there is slight precipitation of the acrylic polymer after the addition of the cerium oxide. Alternatively, if a cerium oxide aquasol is used, it can be diluted with water miscible solvents, such as propylene glycol monomethyl ether or a solvent blend comprising 80 - 90 parts by weight propylene glycol monomethyl ether and 10 - 20 parts by weight diacetone alcohol, prior to addition to the acrylic polymer mixture. This prevents acrylic polymer precipitation. It is important that at least 0.3% water be included in the acrylic primer when the acrylic primer is dissolved in an organic solvent.

The UV absorbance of the acrylic primer can be adjusted by varying the thickness of the acrylic primer or the concentration of the cerium oxide. The preferred thickness for the acrylic primer is less than 7 µ, while the preferred concentration of cerium oxide is 10 to 50 phr.

If scratch, mar or abrasion resistance are desired, a silicone hardcoat may be applied onto the acrylic primer. Such hardcoats contain conventional, well-known substituents that are disclosed in many publications and patents, including U.S. Patents 3,986,997 and 4,419,405 and 4,624,870 that are incorporated herein by reference. Suitable silicone hardcoats include partial hydrolysis and condensation products of substituted silanes in which the substituents include one or more alkyl or aryl groups and one or more alkoxy or acyloxy groups. Preferred alkyl, alkoxy and acyloxy groups are methyl, methoxy and acetate, respectively. Upon hydrolysis, such compounds are converted to silanols that condense to form organopolysiloxanes.

Particularly preferred are the partial hydrolysis and condensation products of organotrialkoxysilanes, especially methyltrimethoxysilanes, usually combined with silica and especially colloidal silica as well as such other materials as flow control agents. Additional organotrialkoxysilanes which can be used in the present invention include, for example: tetraethoxysilane, ethyltriethoxysilane, diethyldiethoxysilane, tetramethoxysilane, methyltrimethoxysilane, and dimethyldimethoxysilane. Such products are typically prepared by heating the organotrialkoxysilane in the presence of water and a hydrolysis catalyst, preferably a mineral acid such as hydrochloric acid or an acetoxy reagent such as acetic acid or triacetoxysilane. Hydrolysis and condensation result in the formation of siloxanols.

The following examples are presented to enable those skilled in the art to understand more clearly and practice the present invention. These examples should not be considered as a limitation upon the scope of the present invention, but merely as being illustrative and representative thereof.

Examples 1, 2 and 3 detail the method of producing a cerium oxide organosol from a commercially available cerium oxide aquasol. Examples 4 and 5 detail the use of an acrylic primer produced with a cerium oxide aquasol. Examples 6, 7 and 8 describe the use of an acrylic primer produced with a cerium oxide organosol. Example 9 details the new and unexpected results obtained by the addition of cerium oxide to the acrylic primer and compares them to the results obtained with the prior art method of adding cerium oxide to the silicone hardcoat.

### Example 1

Fifty grams of 20% by weight colloidal cerium oxide in an aqueous medium, pH 3 and a particle size of 10 - 20 nm, were mixed in a glass bottle with 2 g of methyltrimethoxysilane at room temperature for about 2 hours. Seventy grams of propylene glycol monomethyl ether was added. The water and propylene glycol monomethyl ether form an azeotrope having a boiling point of 98.3°C under 760 mm Hg pressure and containing 48.5% by weight water. To prepare the organosol, azeotropic distillation was carried out on a rotary evaporator at about 50°C and 30 mm Hg. The product contained 16% by weight cerium oxide. The dispersion was uniform and slightly cloudy in appearance.

### Example 2

Using the procedure of Example 1, an organosol containing 19% by weight cerium oxide was prepared in which the cerium oxide was silane-modified by the addition of 2 g of α-glycidoxypropyltrimethoxysilane rather than methyltrimethoxysilane, producing a stable yellow sol.

### Example 3

Using the procedure of Example 1 except that no glycidoxypropyltrimethoxysilane or methyltrimethoxysilane was added so that the solution was not modified with silanes, an organosol containing 23% by weight cerium oxide was prepared in which the cerium oxide was treated with propylene glycol monomethyl ether. The sol was clear and yellow in appearance and the dispersion was found to be stable.

### Example 4

An acrylic polymer mixture was prepared by dissolving 2 parts by weight of polymethyl methacrylate polymer, Elvacite 2041, a product of Imperial Chemical Inc., in 100 parts by weight of a solvent blend consisting of 85 parts by weight propylene glycol monomethyl ether and 15 parts by weight diacetone alcohol. To 25 g of this solution are added 0.5 parts by weight of Nyacol® cerium oxide, that is a product of Nyacol Products Inc., an affiliate of the PQ Corporation, and comprises 20% by weight colloidal cerium oxide in water, with a pH 3.0 and a particle size 10 - 20 nm. The resulting acrylic primer contained 20 phr of cerium oxide.

A panel measuring 4" x 6" x 1/8" and made of Lexan® bisphenol A polycarbonate, a product of the General Electric Co., was flow coated with the acrylic primer. It was air dried under ambient conditions in a vertical position for 2 minutes and then thermally dried in an air circulating convection oven at 130°C for 15 minutes. The coating was smooth and free of any coating defects such as flow lines, craters, and agglomerated gel particles. The coating possessed good optical clarity having light transmittance of 90.1% in the visible region with a low level of light scattering with 0.2% haze. The coating passed a crosshatch adhesion test as defined in ASTM D-3359. It exhibited a yellowness index of 1.6 and a UV absorbance value of 0.27 measured at 300 nm.

### Example 5

Using the method described in Example 4, acrylic primer compositions were prepared by dissolving 2 to 6 parts by weight of a thermoplastic acrylic resin in 100 parts by weight of a suitable solvent. Various amounts of cerium oxide were added to prepare compositions containing 20 to 40 phr of cerium oxide. In some cases, an antiblushing agent and/or a leveling agent were added to the primer with the cerium oxide. Polycarbonate panels were coated with the acrylic primer and dried per the method detailed in Example 4. All coatings were smooth and free of any coating defects such as flow lines, craters and agglomerated gel particles. The coatings possessed good optical clarity with low light scattering and good adhesion. The acrylic primer compositions prepared and the test results obtained are listed in Table 1.

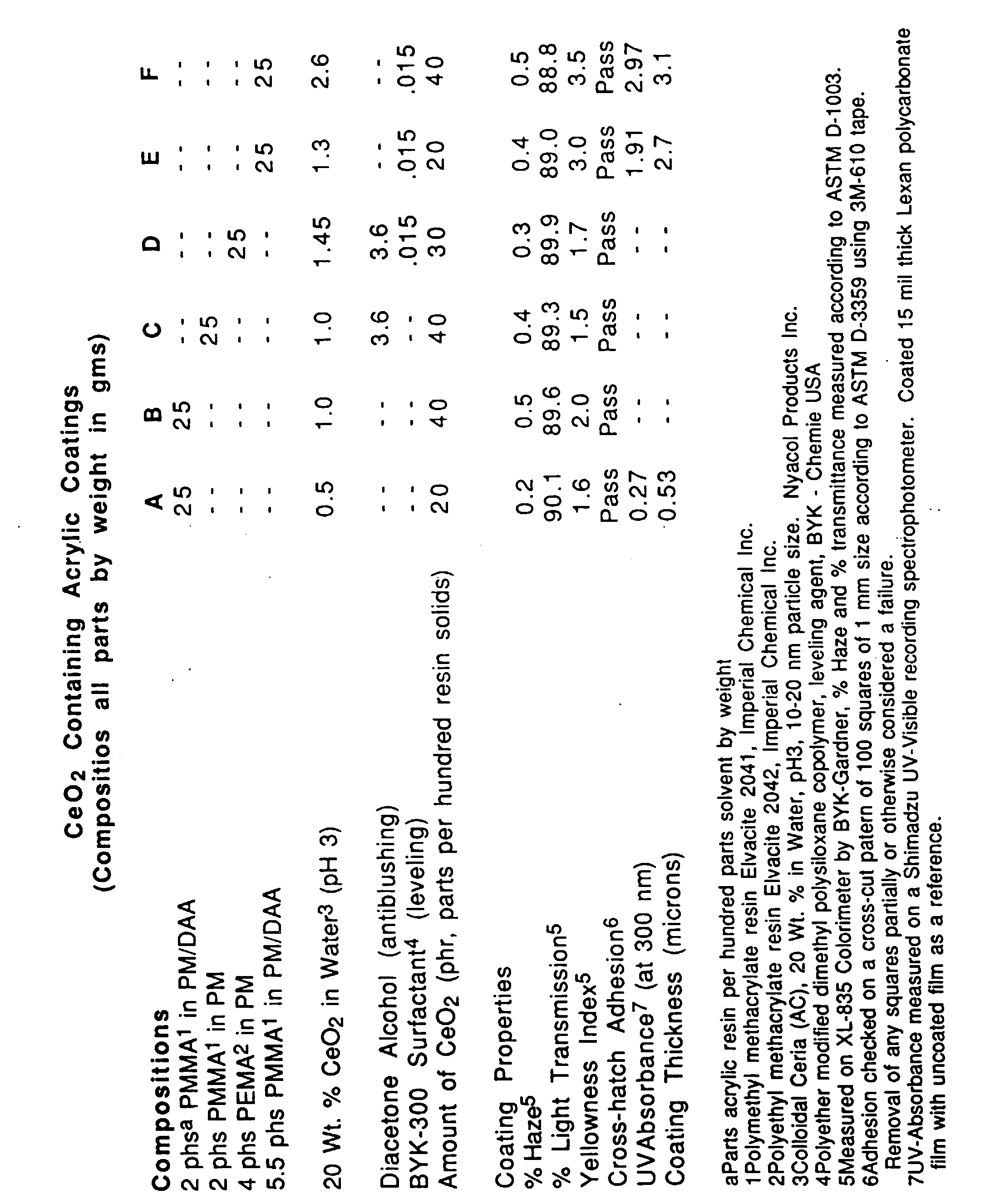

### Example 6 (Control)

It is important for the optically transparent coatings that the colloidal dispersion of cerium oxide be stablilized by the addition of water, otherwise dried coatings show a high level of haze, greater than 1%, and produce agglomerated or gel particles.

An acrylic polymer mixture was prepared by dissolving 2 parts by weight of polymethyl methacrylate polymer, Elvacite® 2041, a product of Imperial Chemical Inc., in 100 parts by weight of propylene glycol monomethyl ether. A 19% by weight silane-modified cerium oxide organosol was prepared by the method of Experiment 2. Polycarbonate panels were coated with the acrylic primer and dried per the method detailed in Example 4. No water was added to the resulting organosol. The coatings exhibited high light scattering, with 2.7 % haze. The coatings also contained agglomerated or gel particles.

### Example 7

An acrylic polymer mixture was prepared by dissolving 2 parts by weight of polymethyl methacrylate polymer, Elvacite® 2041, a product of Imperial Chemical Inc., in 100 parts by weight of propylene glycol monomethyl ether. A 19% by weight silane-modified cerium oxide organosol was prepared by the method of Example 2. This organosol was mixed with 75 % by weight water. This mixture was then added to the acrylic polymer mixture. The resulting acrylic primer was applied to the polycarbonate panels and dried per the method described in Experiment 4.

No precipitation of the polymer or cerium oxide was observed. The coating exhibited a low haze value of 0.3 % and a light transmission of 90.1%.

### Example 8

Use of diacetone alcohol as an antiblushing agent and a silicone-based surfactant as a leveling agent also helps to produce optically transparent coatings with very low haze.

An acrylic polymer mixture was prepared by dissolving 2 parts by weight of polyethyl methacrylate polymer, Elvacite® 2042, a product of Imperial Chemical Inc., in 100 parts by weight of propylene glycol monomethyl ether. An organosol containing 23 % by weight cerium oxide was prepared according to the method of Experiment 3 so that the cerium oxide was not silane-modified. An acrylic primer consisting of 25 parts by weight of the acrylic polymer mixture, 0.45 parts by weight of the cerium oxide organosol, 2.5 parts by weight of diacetone alcohol, an antiblushing agent, and 0.015 parts by weight of BYK-300® surfactant, which is a polyether modified dimethyl polysiloxane copolymer leveling agent and a product of BYK-Chemie USA, was produced. The resulting acrylic primer contained 20 phr of cerium oxide.

The coating exhibited 0.4% haze and 90.5% light transmittance.

The present invention allows for a much higher concentration of cerium oxide in the acrylic primer than was possible in the prior art when cerium oxide was incorporated into the silicone hardcoat. Because the cerium oxide is included in the acrylic primer and not in the silicone hardcoat in the instant invention, the abrasion resistance of the silicone hardcoat is not negatively impacted. These new and unexpected results afforded by the present invention are detailed in the following example.

### Example 9 (Control)

An acrylic primer solution consisting of Elvacite 2041 and 20 phr of cerium oxide and made in accordance with the method of Example 4 was flow coated onto a 4" x 12" x 1/8" bisphenol A polycarbonate panel and baked at 110°C for 45 minutes to remove residual solvent. Dow Corning's Silvue 313 silicone resin was then flow coated onto the primed panel and cured at 110°C for 60 minutes. The Taber abrasion resistance and %Haze were measured. The results are contained in Table 2.

A series of silicone hardcoat resins containing variable amounts of cerium oxide, as detailed in Table 2, were then prepared by adding Nyacol cerium oxide, which comprises 20% by weight colloidal cerium oxide in water, to Silvue 313 silicone resin and mixing. Bisphenol A polycarbonate panels measuring 4" x 12" x 1/8" were first flow coated with Elvacite 2041 acrylic primer. The acrylic primer was baked at 110°C for 45 minutes to remove residual solvent. Each panel was then flow coated with a silicone hardcoat having a different cerium oxide concentration. Each silicone hardcoat was cured at 110°C for 60 minutes. The Taber abrasion resistance and %Haze were measured and the results are indicated in Table 2.

The results in Table 2 clearly show that the silicone hardcoats containing greater than 3 phr cerium oxide experienced a pronounced loss of abrasion resistance. At loadings of 10 phr cerium oxide they also showed significant haziness. In comparison, the panel with 20 phr cerium oxide in the acrylic primer, which was produced per the method of the present invention, was optically clear with 0.2% haze and possessed much improved abrasion resistance.

**Table 2**

| Primer Coating | Silicone Hardcoat | (% Haze, 500 cycles) Taber Abrasion | % Haze |
|---|---|---|---|
| 20 phr CeO₂in Elvacite 2041 | Silvue 313 | 5.1 | 0.2 |
| Elvacite 2041 | Silvue 313 | 4.8 | 0.3 |
| Elvacite 2041 | Silvue 313 + 1 phr CeO₂ | 6.1 | --- |
| Elvacite 2041 | Silvue 313 + 3 phr CeO₂ | 8.6 | --- |
| Elvacite 2041 | Silvue 313 + 5 phr CeO₂ | 19.1 | --- |
| Elvacite 2041 | Silvue 313 + 10 phr CeO₂ | >20 | 12.9 |

## Claims

1. An article comprising:
a. a thermoplastic substrate, and,
b. an acrylic primer applied onto said thermoplastic substrate,
wherein said acrylic primer includes an inorganic UV absorber.

2. An article according to claim 1, wherein said thermoplastic substrate comprises a material from the group consisting of polyetherimide, polyamide, poly(phenylene oxide), polysulfone, and polyester.

3. An article according to claim 1, wherein said thermoplastic substrate comprises polycarbonate.

4. An article according to claim 1, wherein said acrylic primer comprises:
a. an emulsion comprising an acrylic polymer and water, and,
b. a colloidal cerium oxide mixture comprising 15 - 25% by weight colloidal cerium oxide in an aqueous medium, with a pH of about 2.0 to about 4.0 and a particle size of about 10 to about 20 nm.

5. An article according to claim 1, wherein said acrylic primer comprises:
a. an acrylic polymer, and,
b. an organic solvent, and,
c. a colloidal cerium oxide mixture comprising 15 - 25 % by weight colloidal cerium oxide in an organic solvent.

6. An article according to claim 5, wherein said colloidal cerium oxide mixture is silane-modified.

7. An article according to claim 1, further comprising a silicone hardcoat applied onto the acrylic primer, wherein said silicone hardcoat is selected from the group consisting of the partial hydrolysis and condensation products of substituted silanes in which the substituents include one or more alkyl or aryl groups and one or more alkoxy or acyloxy groups.

8. A method to prepare an acrylic primer comprising the following steps:
a. preparing an acrylic polymer mixture by mixing an acrylic polymer in a solvent, and,
b. adding sufficient quantity of a colloidal cerium oxide mixture to said acrylic polymer mixture to yield 10 to 50 phr of cerium oxide.

9. A method according to claim 8, wherein said acrylic polymer comprises a thermoplastic acrylic polymer.

10. A method according to claim 8, wherein said acrylic polymer comprises a thermosettable acrylic polymer.

11. A method according to claim 8, wherein said acrylic polymer mixture comprises 2 to 6 parts by weight of an acrylic po!ymer in 100 parts by weight of an organic solvent.

12. A method according to claim 8, wherein said acrylic polymer mixture comprises an emulsion further comprising an acrylic polymer and water.

13. A method according to claim 8, wherein said acrylic polymer mixture comprises an emulsion further comprising:
a. from about 1 to about 10 weight percent of acrylic polymer solids, and
b. from about 20 to about 45 weight percent of a material selected from the group consisting of hydroxy ether, alkanol, and mixtures thereof, and,
c. from about 45 to about 80 weight percent of water.

14. A method according to claim 8, wherein said colloidal cerium oxide mixture comprises 15 - 25% by weight colloidal cerium oxide in an aqueous medium, with a pH of about 2.0 to about 4.0 and a particle size of about 10 to about 20 nm.

15. A method according to claim 8, wherein said colloidal cerium oxide mixture comprises 15 - 25 % by weight colloidal cerium oxide in an organic solvent.

16. A method to produce a cerium oxide organosol comprising the following steps:
a. mixing a cerium oxide aquasol with a water miscible solvent, and,
b. distilling the water out of the resulting mixture azeotropically,
wherein the cerium oxide aquasol is added to the water miscible solvent in sufficient quantity to produce the desired concentration of cerium oxide in the organosol after azeotropic distillation.

17. A method according to claim 16 wherein said water miscible solvent comprises propylene glycol monomethyl ether.

18. A method according to claim 16 further comprising the step of adding an alkoxysilane to the cerium oxide aquasol prior to distilling azeotropically.
